# FASCICULE DE BREVET EUROPEEN

(11) **EP 3 706 502 B1**
(45) Date de publication et mention de la délivrance du brevet: **15.07.2026**
(21) Numéro de dépôt: 20161142.3
(22) Date de dépôt: 05.03.2020
(51) Int. Cl.: H04W 84/04, H04W 12/06, H04W 16/26

(54) **PROCÉDÉ DE CONNEXION D'UN RÉPÉTEUR DE RÉSEAU, ET ENSEMBLE D'ACCÈS COMPRENANT UN RÉPÉTEUR DE RÉSEAU ET UN ÉQUIPEMENT D'ACCÉS**
VERBINDUNGSVERFAHREN EINES NETZWERK-REPEATERS, UND EIN SATZ MIT EINEM NETZWERK-REPEATERS UND EINEM ZUGANGSSETS
CONNECTION METHOD OF A NETWORK REPEATER, AND A SET COMPRISING A NETWORK REPEATER AND AN ACCESS SET

(30) Priorité: 08.03.2019 FR 1902402
(43) Date de publication de la demande: 09.09.2020
(73) Titulaire: Freebox, 75008 Paris (FR)
(72) Inventeur: ROBERDET, Olivier, 75017 PARIS (FR); ESCANDE, Nicolas, 75012 PARIS (FR); EBERHARDT, Arthur, 92800 PUTEAUX (FR); VERDU, Pierre, 78480 VERNEUIL SUR SEINE (FR)
(74) Mandataire: Lavoix

(56) Documents cités:
- WO-A1-2018/104006
- US-A1- 2011 235 568
- US-A1- 2011 314 522
- US-A1- 2013 163 762

## Description

La présente invention concerne un procédé de connexion d'un répéteur de réseau.

La présente invention concerne également un produit programme d'ordinateur, un répéteur de réseau et un ensemble d'accès associés.

De manière connue en soi, un répéteur de réseau, notamment un répéteur d'un réseau Wi-Fi tel que défini selon le groupe de normes IEEE 802.11, permet d'étendre un réseau sans fil existant dans des zones non-couvertes initialement par ce réseau.

Le réseau sans fil initial est généralement créé par un équipement d'accès tel qu'un routeur connecté à un serveur distant par exemple via un système de câblage adapté.

Ainsi, le répéteur de réseau amplifie les signaux radioélectriques issus de l'équipement d'accès ou destinés à celui-ci pour avoir une portée plus large du réseau sans fil initial.

On connait notamment de WO 2018/104006 A1 un procédé d'installation d'un tel répéteur de réseau. US2011/314522 divulgue un procédé d'authentification d'un relais sur la base de clefs publics et privés. US2013/163762 divulgue un procédé d'authentification d'un répéteur de réseau utilisant une clef publique et une clef privée comprenant la transmission d'un Attach request. US2011/235568 divulgue un procédé de connexion d'un répéteur à un réseau sans fil qui comprend la détermination de la qualité de connexion, l'analyse de l'état de la couverture et la détermination d'une action d'ajustement d'un paramètre opérationnel du répéteur.

Certains répéteurs de réseau peuvent également fonctionner en régime dit « point d'accès » dans lequel ils sont raccordés à l'équipement d'accès par câble et peuvent donc créer leur propre réseau sans fil. Ce régime est notamment applicable lorsque l'équipement d'accès ne permet pas de créer un réseau sans fil ou lorsque le réseau sans fil créé par un tel équipement n'est pas de qualité souhaitée.

Les répéteurs de réseau peuvent ainsi équiper un très large spectre d'installations et sont notamment applicables chez des particuliers.

Pour installer un répéteur de réseau, il est généralement nécessaire de le connecter à l'équipement d'accès correspondant via un procédé de connexion sécurisé.

Dans ce cas, un utilisateur a besoin d'indiquer explicitement le réseau sans fil créé par l'équipement d'accès, son mot de passe et éventuellement un certain nombre de caractéristiques techniques relatives à ce réseau, telles que passerelle, port d'accès, type de sécurité, etc.

On conçoit alors que cela rend l'installation d'un répéteur de réseau particulièrement complexe, surtout pour un utilisateur ayant peu de connaissance dans le domaine de télécommunication ou informatique. Cela est généralement le cas d'un particulier souhaitant étendre son réseau sans fil à domicile.

On connait également la technologie WPS (de l'anglais « Wi-Fi Protected Setup ») qui permet d'appairer un équipement compatible tel qu'un répéteur à un routeur de manière simple. Toutefois, cette technologie n'est pas disponible sur tous les routeurs et présente de plus des failles de sécurité importantes.

La présente invention a pour but de simplifier considérablement l'installation d'un répéteur de réseau pour la rendre accessible à un utilisateur quelconque, notamment à un utilisateur n'ayant aucune connaissance spécifique dans le domaine, tout en assurant un haut niveau de sécurité.

À cet effet, l'invention a pour objet un procédé de connexion d'un répéteur de réseau selon la revendication 1.

Suivant d'autres aspects avantageux de l'invention, le procédé comprend une ou plusieurs des caractéristiques selon les revendications 2 à 11.

L'invention a également pour objet un produit programme d'ordinateur comportant des instructions logicielles qui, lorsque mises en œuvre par un équipement informatique, mettent en œuvre le procédé tel que défini précédemment.

L'invention a également pour objet un répéteur de réseau comprenant des moyens techniques adaptés pour la mise en œuvre du procédé tel que défini précédemment.

L'invention a également pour objet un ensemble d'accès comprenant :
- un équipement d'accès apte à mettre en œuvre un réseau sans fil et à recevoir d'un serveur distant une information d'identification ;
- un répéteur de réseau tel que décrit précédemment configuré pour se connecter automatiquement à l'équipement d'accès ayant reçu une information d'identification relative à ce répéteur de réseau pour étendre ou remplacer le réseau sans fil mis en œuvre par cet équipement d'accès.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un ensemble d'accès selon l'invention, l'ensemble comprenant notamment un répéteur de réseau selon l'invention ;
- la figure 2 est une vue schématique détaillée du répéteur de réseau de la figure 1 ; et
- la figure 3 est un organigramme d'un procédé de connexion selon l'invention, le procédé étant mis en œuvre par le répéteur de réseau de la figure 2.

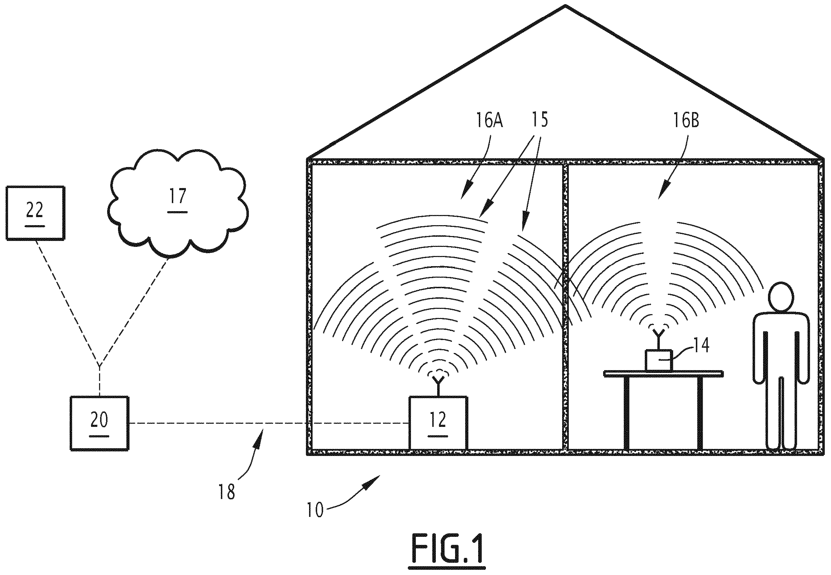

On a en effet illustré sur la figure 1 un ensemble d'accès 10 permettant de mettre en œuvre un réseau sans fil, par exemple un réseau conforme au groupe de normes IEEE 802.11. Ce réseau est utilisable par un utilisateur.

Cet ensemble d'accès 10 est par exemple installé à domicile de l'utilisateur et comprend un équipement d'accès 12 et un répéteur de réseau 14.

L'équipement d'accès 12 présente un routeur permettant notamment de créer un réseau sans fil sécurisé. Pour ce faire, le routeur dispose d'une antenne apte à recevoir et à transmettre des signaux radioélectriques et d'une unité de traitement apte à générer des signaux à transmettre et à analyser des signaux reçus.

Le réseau sans fil créé par le routeur présente une zone de couverture 15 restreinte. Ainsi, dans l'exemple de la figure 1, cette zone de couverture 15 couvre entièrement une première pièce 16A et seulement une partie d'une deuxième pièce 16B, du domicile de l'utilisateur.

Le routeur permet en outre de créer un réseau local par câble par exemple de type Ethernet. À cet effet, le routeur dispose en outre d'un connecteur adapté.

Selon un exemple particulier de réalisation de l'invention, l'équipement d'accès 12 présente non seulement un routeur comme décrit précédemment mais également un ou plusieurs répéteurs permettant d'étendre la zone de couverture 15 du réseau sans fil créé par le routeur. Selon encore un exemple, ce ou ces répéteurs sont connectés au routeur par câble et permettent de créer un réseau sans fil à la place du routeur.

Ainsi, dans tout ce qui suit, par terme « équipement d'accès », on entend un routeur soit pris isolement soit en combinaison avec un ou plusieurs répéteurs déjà configurés pour étendre ou créer un réseau sans fil.

À travers le réseau sans fil ou le réseau local par câble, l'équipement d'accès 12 permet à l'utilisateur d'accéder à un réseau global 17, comme par exemple Internet.

Pour ce faire, l'équipement d'accès 12 est raccordé par des moyens de transmission 18 à un commutateur 20 comprenant des moyens techniques nécessaires pour donner l'accès au réseau global 17. Un tel commutateur 20 est connu en soi et ne sera pas décrit en détail par la suite.

Les moyens de transmission 18 se présentent notamment sous la forme d'un câble conçu pour assurer une liaison téléphonique ou d'un câble optique conçu spécialement pour assurer la transmission des données numériques.

Le fonctionnement du commutateur 20 et au moins partiellement de l'équipement d'accès 12 est contrôlé par un serveur distant 22.

En particulier, le serveur distant 22 est apte à transmettre des commandes à l'équipement d'accès 12 permettant par exemple de configurer au moins certains de paramètres de fonctionnement de cet équipement 12. Le serveur distant 22 est apte par exemple à envoyer à l'équipement 12 une commande désactivant complètement son fonctionnement ou le fonctionnement du réseau sans fil créé par celui-ci.

Avantageusement, le serveur distant 22 assure le rôle d'un fournisseur de services de télécommunication spécialisé. Ces services comprennent par exemple l'accès au réseau Internet, l'accès au réseau téléphonique et/ou à tout autre service multimédia.

Plus avantageusement, l'équipement d'accès 12 est fourni par le même fournisseur de services de télécommunication.

Le répéteur de réseau 14 selon l'invention permet d'étendre la zone de couverture 15 du réseau sans fil créé par l'équipement d'accès. Dans certain cas expliqués ci-dessous, le répéteur de réseau 14 permet en outre de remplacer le réseau sans fil créé par l'équipement d'accès par un autre réseau sans fil.

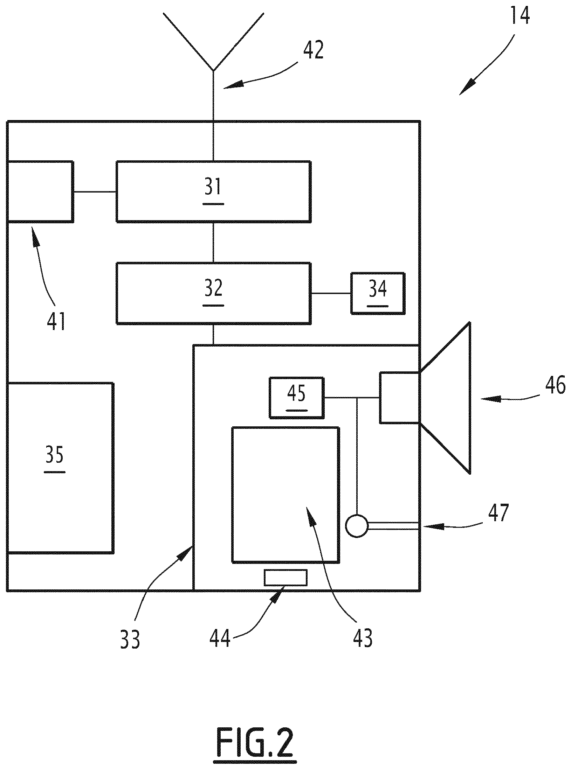

Le répéteur de réseau 14 sera désormais expliqué en détail en référence à la figure 2.

Avantageusement, le répéteur de réseau 14 est fourni et éventuellement fabriqué par le même fournisseur de services de télécommunication que l'équipement d'accès 12.

Comme cela est visible sur cette figure 2, le répéteur de réseau 14 comprend une unité de communication 31, une unité de traitement 32, une unité d'interaction 33 avec l'utilisateur, une unité de mémorisation 34 et une unité d'alimentation 35.

L'unité de communication 31 permet au répéteur de réseau 14 de recevoir et de transmettre des données numériques sous la forme des signaux électromagnétiques transmis par câble ou sous la forme de signaux radioélectriques.

À cet effet, l'unité de communication 31 comprend une antenne 42 par exemple analogue à l'antenne de l'équipement d'accès 12, permettant de recevoir et de transmettre des signaux radioélectriques.

Optionnellement, l'unité de communication 31 comprend en outre un connecteur 41, par exemple de type Ethernet ou CPL (technologie « courants porteurs en ligne »), permettant de la raccorder par un ou plusieurs câbles à l'équipement d'accès 12. Ce connecteur est notable utilisable lorsque le répéteur de réseau 14 est destiné à créer un réseau sans fil à la place du routeur 12 comme cela sera expliqué par la suite.

L'unité de traitement 32 permet de traiter les données numériques reçues par l'unité de communication 31 et de générer des données numériques destinées à cette unité de communication 31.

Par ailleurs, avantageusement, au moins certaines des données numériques transmises ou reçues par l'unité de communication 31 sont cryptées selon des techniques de cryptage connues en soi. Dans ce cas, l'unité de traitement 32 permet d'encrypter et de décrypter ces données.

L'unité de traitement 32 se présente par exemple au moins partiellement sous la forme d'un logiciel mis en œuvre par un processeur adapté et stocké dans une mémoire adaptée.

En complément ou en variante, l'unité de traitement 32 se présente au moins partiellement sous la forme d'un circuit logique programmable par exemple de type FPGA (de l'anglais « Field-programmable Gate Array »).

L'unité d'interaction 33 avec l'utilisateur forme une interface d'interaction avec l'utilisateur. Cette unité d'interaction 33 est apte à acquérir des commandes transmises par l'utilisateur et à lui communiquer des informations nécessaires.

Ainsi, par exemple, l'unité d'interaction 33 comprend optionnellement un écran 43 permettant d'indiquer à l'utilisateur des informations nécessaires et au moins un bouton 44 permettant à l'utilisateur d'introduire au moins certaines commandes.

Avantageusement, selon l'invention, l'unité d'interaction 33 comprend en outre un module vocal 45, un haut-parleur 46 et un microphone 47.

Le module vocal 45 se présente par exemple sous la forme d'un logiciel permettant de transmettre au moins certaines indications à l'utilisateur sous la forme vocale via le haut-parleur 46.

Ce module vocal 45 permet en outre d'acquérir des commandes de l'utilisateur données sous la forme vocale et d'interpréter chacune de ces commandes pour lui associer un évènement correspondant. Cet évènement est ensuite transmis à l'unité de traitement 32.

L'unité de mémorisation 34 permet de mémoriser des données d'identification relatives au répéteur 14. Cette unité 34 fait partie par exemple de la mémoire globale du répéteur 14.

Les données d'identification permettent d'identifier et d'authentifier le répéteur 14 de manière certaine et sécurisée auprès de l'équipement d'accès 12 comme cela sera expliqué par la suite.

Ces données d'identification sont par exemple mémorisées dans l'unité de mémorisation 34 lors de la fabrication du répéteur 14 et par exemple, ne sont pas modifiables.

Les données d'identification comprennent notamment une clef privée unique permettant à l'unité de traitement 32 d'encrypter un message qui peut être décrypté uniquement par une clef publique associée à la clef privée.

Comme son nom l'indique, la clef publique peut être distribuée sans compromettre la sécurité du répéteur de réseau 14.

En particulier, selon l'invention, la clef publique associée à la clef privée est transmise au serveur distant 22 lors de la fabrication du répéteur 14 où elle est gardée avec un identifiant du répéteur 14 comme par exemple son adresse MAC, dans une liste de répéteurs disponibles.

Finalement, l'unité d'alimentation 35 permet d'alimenter l'ensemble des composantes du répéteur réseau 14. Elle permet par exemple d'adapter le courant et la tension fournis par le réseau électrique à l'alimentation de ces composantes.

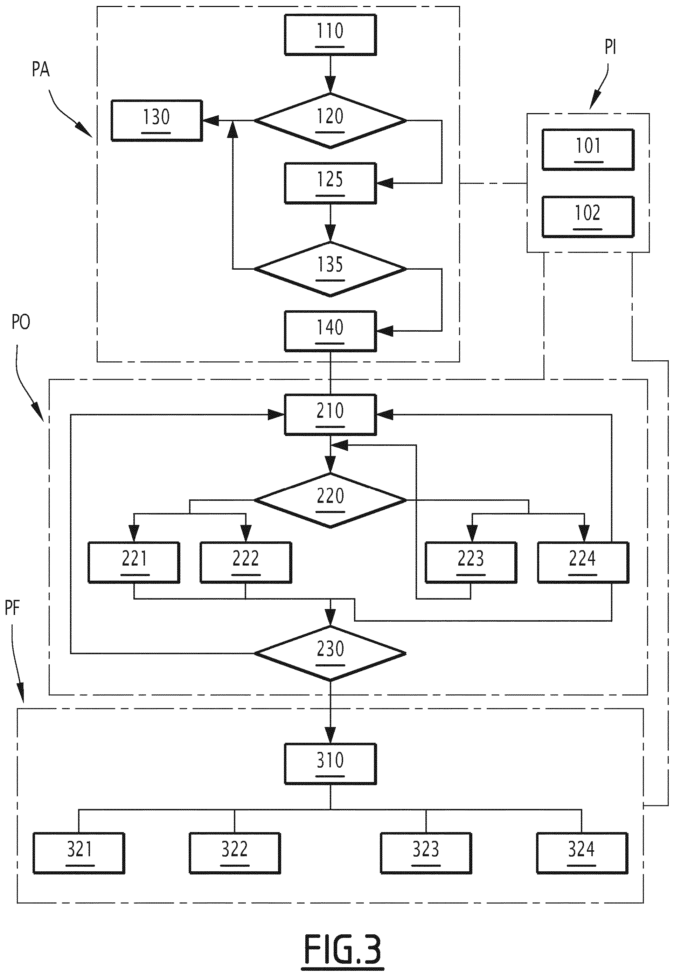

Le procédé de connexion mis en œuvre par le répéteur 14 et permettant de le connecter à l'équipement d'accès 12 pour étendre son réseau sans fil sera désormais décrit en référence à la figure 3 présentant un organigramme des étapes de ce procédé.

Initialement, il est considéré que seul l'équipement d'accès 12 est installé chez l'utilisateur et assure donc la zone de couverture 15 expliquée précédemment.

Lorsque l'utilisateur souhaite étendre cette zone de couverture 15 par exemple dans la deuxième pièce 16B entièrement, il commande un répéteur de réseau auprès par exemple du serveur distant 22 ou après de tout autre serveur connecté à ce serveur distant 22.

Le serveur distant 22 identifie l'utilisateur et donc son équipement d'accès 12 et attribue à l'utilisateur un répéteur choisi dans la liste de répéteurs disponibles. Ce répéteur attribué correspond par exemple au répéteur 14 décrit précédemment.

Ensuite, le serveur distant 22 envoie la clef publique associée à ce répéteur 14 à l'équipement d'accès 12.

L'équipement d'accès 12 devient donc ciblé dans la mesure où le répéteur de réseau 14 est désormais destiné à être connecté à cet équipement ciblé 12.

Ensuite, lorsque l'utilisateur reçoit le répéteur de réseau 14 et le branche dans le réseau électrique à proximité de l'équipement accès 12 et éventuellement, le raccorde par un câble avec ce réseau, le répéteur de réseau 14 met en œuvre une phase d'interaction PI du procédé de connexion, décrite ci-dessous.

On entend par « proximité » soit la disposition du répéteur de réseau 14 dans la zone de couverture 15 de l'équipement d'accès 12 soit à l'extérieur de cette zone mais avec un accès au réseau local par câble.

Cette phase inclut notamment deux étapes qui sont répétées tout au long de la mise en œuvre du procédé en parallèle avec d'autres phases du procédé, lorsque les étapes de ces phases communiquent des informations à l'utilisateur ou acquièrent des commandes provenant de l'utilisateur.

En particulier, cette phase d'interaction inclut une étape 101 de communication des informations en cours de traitement par le répéteur de réseau 14 et une étape 102 d'acquisition de commandes de l'utilisateur nécessaires pour mettre en œuvre l'étape en cours d'exécution par le répéteur de réseau 14.

Ainsi, par exemple, au démarrage, le répéteur 14 met en œuvre une étape de communication lors de laquelle il communique à l'utilisateur un message de bienvenue et démarre une phase d'authentification PA auprès de l'équipement d'accès ciblé 12.

Comme indiqué précédemment, avantageusement selon l'invention, les étapes 101, 102 de communication des informations et d'acquisition de commandes sont mises en œuvre sous la forme vocale. Ainsi, les informations communiquées à l'utilisateur comprennent des questions auxquelles les réponses peuvent être formulées de manière simple par l'utilisateur. Avantageusement, ces réponses comprennent « oui » ou « non » ou d'autres formes simples à interpréter. Par ailleurs, il est clair que ces réponses constituent des commandes données par l'utilisateur.

Il est possible de mettre en œuvre cette phase d'interaction par toute autre interface disponible. Cela peut être par exemple le cas de l'écran 43 et du bouton 44 ou alors d'une application pour un téléphone mobile ou un ordinateur, conçue spécialement à cet effet.

Avantageusement, la phase d'interaction PI comprend une étape permettant à l'utilisateur de choisir l'interface de communication souhaitée.

La phase d'authentification PA comprend une étape initiale 110 lors de laquelle le répéteur de réseau 14 effectue une recherche de l'ensemble d'équipements d'accès à proximité.

Puis, lors de l'étape suivante 120, le répéteur 14 identifie les équipements d'accès trouvés et si parmi ces équipements, au moins un est de type prédéterminé recherché, il passe à l'étape 125 et dans le cas contraire, à l'étape 130.

En particulier, un équipement d'accès est de type prédéterminé recherché lorsque par exemple il provient du même fournisseur de services de télécommunication que le répéteur de réseau 14. Ce type est déterminé par le répéteur 14 en utilisant par exemple l'adresse MAC de l'équipement d'accès correspondant.

Lors de l'étape 130, le répéteur 14 informe l'utilisateur qu'aucun équipement compatible n'est trouvé et finalise par exemple le procédé ou propose de déplacer le répéteur 14 pour effectuer une nouvelle recherche ou d'utiliser par exemple une autre interface de communication.

Lors de l'étape 125, pour le ou chaque équipement d'accès trouvé, le répéteur de réseau 14 envoie une requête d'authentification comprenant un message d'authentification crypté en utilisant la clef privée.

Ce message peut par exemple comprendre l'identifiant du répéteur 14 ou tout autre message prédéterminé et reconnaissable par l'équipement d'accès ciblé 12.

Si lors de l'étape 135, le répéteur 14 reçoit une réponse affirmative de la part d'un équipement d'accès trouvé, il passe à l'étape 140 et dans le cas contraire, il passe à l'étape 130 décrite précédemment.

En particulier, selon un exemple de réalisation, lors de l'étape 135, le répéteur 14 attend la réception d'une réponse affirmative pendant une période de temps prédéterminée. S'il ne reçoit pas de réponse pendant cette période de temps, il décide alors qu'aucun des équipements d'accès trouvés ne correspond à l'équipement d'accès ciblé 12 et passe alors à l'étape 130, et dans le cas contraire, il passe directement à l'étape 140.

La réponse affirmative est par exemple de forme prédéterminée et signifie notamment que l'équipement d'accès ciblé 12 a pu décrypter le message avec la clef publique.

Lors de l'étape 140, le répéteur 14 reçoit de la part de l'équipement ciblé 12 des paramètres de configuration relatifs à l'accès au réseau sans fil mis en œuvre par cet équipement d'accès ciblé 12.

Ces paramètres comprennent par exemple le mot de passe pour accéder au réseau sans fil et éventuellement le type de sécurité utilisé.

Ces paramètres sont par exemple transmis automatiquement par l'équipement d'accès ciblé 12 et font par exemple partie de la réponse affirmative, ou sont transmis en complément de la réponse affirmative par exemple à la demande expresse du répéteur.

Après cette étape 140, le répéteur 14 passe à l'exécution d'une phase d'optimisation PO de l'emplacement du répéteur 14. Cette phase peut être mise en œuvre de façon facultative, par exemple avec un accord de l'utilisateur.

Lors de l'étape initiale 210 de cette phase d'optimisation PO, le répéteur 14 détermine la qualité de connexion sans fil avec l'équipement d'accès ciblé 12.

Cette qualité de connexion sans fil est déterminée par exemple en mesurant le niveau de réception de signaux issus de l'équipement d'accès ciblé 12, le débit d'échange de données avec cet équipement, etc.

Puis, lors de l'étape 220, le répéteur 14 détermine s'il est connecté par ailleurs à l'équipement d'accès ciblé 12 par câble.

Si le répéteur 14 est connecté par câble et cela devrait l'être, le répéteur 14 passe à l'étape 221. Cela signifie alors que le répéteur 14 devrait être utilisé en tant qu'un point d'accès, par exemple en remplaçant le réseau sans fil mis en œuvre par l'équipement d'accès ciblé 12 ou en créant le réseau sans fil dans un endroit éloigné de l'équipement d'accès ciblé 12.

En outre, le répéteur 14 détermine s'il devrait ou non être connecté par câble à l'équipement d'accès ciblé 12 par exemple en fonction du type de cet équipement 12. Ainsi, pour certains types des équipements ciblés (modèle vieilli, incompatible, etc.), le répéteur 14 détermine qu'il devrait être connecté par câble. Pour certains autres (modèle compatible par exemple), le répéteur 14 détermine qu'il ne devrait pas être connecté par câble.

Si le répéteur 14 est connecté par câble et cela ne devrait pas l'être, le répéteur 14 passe à l'étape 222. Cela signifie alors que le répéteur 14 devrait être utilisé pour étendre le réseau sans fil existant.

Si le répéteur 14 n'est pas connecté par câble et cela devrait l'être, le répéteur 14 passe à l'étape 223. Cela signifie alors que le répéteur 14 devrait être raccordé par câble pour être utilisé en tant qu'un point d'accès principal.

Finalement, si le répéteur 14 n'est pas connecté par câble et cela ne devrait pas l'être, le répéteur 14 passe à l'étape 224. Cela signifie alors que le répéteur 14 devrait être utilisé pour étendre le réseau sans fil existant sans être connecté par câble à l'équipement d'accès.

Lors de l'étape 221, le répéteur 14 analyse la qualité de connexion sans fil déterminée lors de l'étape 210 et détermine un état caractérisant l'emplacement courant du répéteur 14 par rapport à l'équipement d'accès ciblé 12.

En particulier, cet état est choisi dans le groupe comprenant les caractéristiques suivantes : « tout près », « trop loin », « par forcément à côté » et « améliorable ».

Puis, en fonction de l'état déterminé, le répéteur 14 détermine l'action nécessaire pour optimiser la position du répéteur et communique cette action à l'utilisateur.

En particulier, lorsque l'état correspond à « tout près », le répéteur 14 détermine par exemple qu'aucune action spécifique n'est nécessaire.

Lorsque l'état correspond à « trop loin », le répéteur 14 détermine par exemple qu'il est nécessaire de le rapprocher de l'équipement d'accès ciblé 12 pour fonctionner normalement.

Lorsque l'état correspond à « par forcément à côté », le répéteur 14 détermine par exemple qu'il est possible de le rapprocher de l'équipement d'accès ciblé 12 pour un meilleur fonctionnement.

Lorsque l'état correspond à « améliorable », le répéteur 14 détermine par exemple qu'il est souhaitable de le rapprocher de l'équipement d'accès ciblé 12 pour un fonctionnement normal.

Puis, le répéteur 14 passe à l'étape 230, lors de laquelle il demande à l'utilisateur si l'action communiquée sera effectuée. Dans le cas affirmatif, l'utilisateur débranche alors le répéteur 14 et après son nouveau branchement, le répéteur 14 passe à nouveau à l'étape initiale 210 de la phase d'optimisation PO.

Dans le cas contraire, le répéteur 14 passe à une phase de finalisation PF de connexion décrite par la suite.

L'étape 222 est analogue à l'étape 221. En particulier, lors de cette étape 222, le répéteur 14 analyse la qualité de connexion sans fil et détermine un état caractérisant l'emplacement courant du répéteur 14 par rapport à l'équipement d'accès ciblé 12.

Toutefois, contrairement à l'étape 221, les états déterminés peuvent être différents. En particulier, dans ce cas, chaque état est choisi dans le groupe comprenant les caractéristiques suivantes : « très près », « trop loin », « pas forcément à côté » et « améliorable ».

Puis, en fonction de l'état déterminé, le répéteur 14 détermine l'action nécessaire pour optimiser la position du répéteur et communique cette action à l'utilisateur.

En particulier, lorsque l'état correspond à « très près », le répéteur 14 détermine qu'il est peut-être nécessaire de l'éloigner de l'équipement d'accès ciblé 12 pour avoir un réseau sans fil plus étendu.

Lorsque l'état correspond à « trop loin », le répéteur 14 détermine par exemple qu'il est nécessaire de le rapprocher de l'équipement d'accès ciblé 12 pour fonctionner normalement.

Lorsque l'état correspond à « parfait », le répéteur 14 détermine qu'aucune action spécifique n'est nécessaire.

Lorsque l'état correspond à « améliorable », le répéteur 14 détermine par exemple qu'il est souhaitable de le rapprocher de l'équipement d'accès ciblé 12 pour un fonctionnement normal.

Puis, comme dans le cas précédent, à la fin de cette étape 222, le répéteur 14 passe à l'étape 230.

Lors de l'étape 223, le répéteur 14 communique à l'utilisateur qu'il est nécessaire de le brancher à l'équipement d'accès ciblé 12 et passe à nouveau à l'étape 220 ou 210.

L'étape 224 est par exemple analogue à l'étape 222 décrite précédemment. En particulier, lors de cette étape 224, le répéteur 14 analyse la qualité de connexion sans fil et détermine un état caractérisant l'emplacement courant du répéteur qui est choisi dans le groupe comprenant les caractéristiques suivantes : « très près », « trop loin », « par forcément à côté » et « améliorable ».

Puis, en fonction de l'état déterminé, le répéteur 14 détermine l'action nécessaire comme expliqué dans le cas de l'étape 222.

Selon un exemple de réalisation, les messages communiqués à l'utilisateur en fonction de l'état peuvent différer de ceux communiqués lors de l'étape 222.

Par ailleurs, à la différence de l'étape 222, lorsque l'état déterminé correspond à « trop loin », le répéteur 14 propose directement à l'utilisateur de débrancher le répéteur 12 afin de l'approcher de l'équipement d'accès ciblé 12 et après un nouveau branchement, exécute l'étape 210.

Lorsque cela n'a pas été fait, à la fin de l'étape 224, le répéteur 14 passe à l'étape 230 décrite précédemment.

Lors de l'étape initiale 310 de la phase de finalisation PF, le répéteur 14 se connecte à l'équipement d'accès ciblé 12 en utilisant les paramètres de configuration reçus et met en place un nouveau réseau sans fil.

Puis, optionnellement, le répéteur 14 exécute au moins l'une des étapes 321 à 324 décrites ci-dessous.

En particulier, lors de l'étape 321, le répéteur 14 demande à l'utilisateur d'attribuer un nom à l'emplacement actuel du répéteur et après une réponse de l'utilisateur, mémorise ce nom.

Lors de l'étape 322, lorsque le répéteur de réseau 14 est connecté par câble à l'équipement d'accès ciblé 12 et lorsque cela devrait l'être, le répéteur 14 propose de désactiver le réseau sans fil mis en œuvre par l'équipement d'accès ciblé 12 et en cas d'une réponse affirmative, désactive ce réseau. Pour cela, il envoie par exemple une commande adaptée à l'équipement d'accès ciblé 12 ou au serveur distant 22.

Lors de l'étape 323, le répéteur 14 propose d'installer un autre répéteur analogue. Dans ce cas, cet autre répéteur met en œuvre le procédé de connexion dans lequel le répéteur 14 est considéré comme faisant partie de l'équipement d'accès ciblé 12.

Lors de l'étape 324, le répéteur 14 détermine le temps total écoulé à partir du démarrage du procédé de connexion ou d'une série de ces procédés lorsqu'ils ont été mis en œuvre de façon consécutive par plusieurs répéteurs analogues. Puis, il communique ce temps à l'utilisateur.

On conçoit alors que l'invention permet une connexion rapide et particulièrement simple d'un répéteur de réseau même pour un utilisateur n'ayant aucune connaissance spécifique dans le domaine.

Cela est rendu possible grâce à la phase d'authentification particulière qui utilise une information d'identification transmise préalablement à l'équipement d'accès.

Par ailleurs, l'installation du répéteur demande un nombre limité des commandes de la part de l'utilisateur. Ainsi, il est possible d'associer une interface vocale à l'utilisateur ce qui permet de simplifier davantage l'installation du répéteur.

En particulier, lorsque l'état correspond à « très près », le répéteur 14 détermine qu'il est peut-être nécessaire de l'éloigner de l'équipement d'accès ciblé 12 pour avoir un réseau sans fil plus étendu.

Lorsque l'état correspond à « trop loin », le répéteur 14 détermine par exemple qu'il est nécessaire de le rapprocher de l'équipement d'accès ciblé 12 pour fonctionner normalement.

Lorsque l'état correspond à « parfait », le répéteur 14 détermine qu'aucune action spécifique n'est nécessaire.

Lorsque l'état correspond à « améliorable », le répéteur 14 détermine par exemple qu'il est souhaitable de le rapprocher de l'équipement d'accès ciblé 12 pour un fonctionnement normal.

Puis, comme dans le cas précédent, à la fin de cette étape 222, le répéteur 14 passe à l'étape 230.

Lors de l'étape 223, le répéteur 14 communique à l'utilisateur qu'il est nécessaire de le brancher à l'équipement d'accès ciblé 12 et passe à nouveau à l'étape 220 ou 210.

L'étape 224 est par exemple analogue à l'étape 222 décrite précédemment. En particulier, lors de cette étape 224, le répéteur 14 analyse la qualité de connexion sans fil et détermine un état caractérisant l'emplacement courant du répéteur qui est choisi dans le groupe comprenant les caractéristiques suivantes : « très près », « trop loin », « par forcément à côté » et « améliorable ».

Puis, en fonction de l'état déterminé, le répéteur 14 détermine l'action nécessaire comme expliqué dans le cas de l'étape 222.

Selon un exemple de réalisation, les messages communiqués à l'utilisateur en fonction de l'état peuvent différer de ceux communiqués lors de l'étape 222.

Par ailleurs, à la différence de l'étape 222, lorsque l'état déterminé correspond à « trop loin », le répéteur 14 propose directement à l'utilisateur de débrancher le répéteur 12 afin de l'approcher de l'équipement d'accès ciblé 12 et après un nouveau branchement, exécute l'étape 210.

Lorsque cela n'a pas été fait, à la fin de l'étape 224, le répéteur 14 passe à l'étape 230 décrite précédemment.

Lors de l'étape initiale 310 de la phase de finalisation PF, le répéteur 14 se connecte à l'équipement d'accès ciblé 12 en utilisant les paramètres de configuration reçus et met en place un nouveau réseau sans fil.

Puis, optionnellement, le répéteur 14 exécute au moins l'une des étapes 321 à 324 décrites ci-dessous.

En particulier, lors de l'étape 321, le répéteur 14 demande à l'utilisateur d'attribuer un nom à l'emplacement actuel du répéteur et après une réponse de l'utilisateur, mémorise ce nom.

Lors de l'étape 322, lorsque le répéteur de réseau 14 est connecté par câble à l'équipement d'accès ciblé 12 et lorsque cela devrait l'être, le répéteur 14 propose de désactiver le réseau sans fil mis en œuvre par l'équipement d'accès ciblé 12 et en cas d'une réponse affirmative, désactive ce réseau. Pour cela, il envoie par exemple une commande adaptée à l'équipement d'accès ciblé 12 ou au serveur distant 22.

Lors de l'étape 323, le répéteur 14 propose d'installer un autre répéteur analogue. Dans ce cas, cet autre répéteur met en œuvre le procédé de connexion dans lequel le répéteur 14 est considéré comme faisant partie de l'équipement d'accès ciblé 12.

Lors de l'étape 324, le répéteur 14 détermine le temps total écoulé à partir du démarrage du procédé de connexion ou d'une série de ces procédés lorsqu'ils ont été mis en œuvre de façon consécutive par plusieurs répéteurs analogues. Puis, il communique ce temps à l'utilisateur.

On conçoit alors que l'invention permet une connexion rapide et particulièrement simple d'un répéteur de réseau même pour un utilisateur n'ayant aucune connaissance spécifique dans le domaine.

Cela est rendu possible grâce à la phase d'authentification particulière qui utilise une information d'identification transmise préalablement à l'équipement d'accès.

Par ailleurs, l'installation du répéteur demande un nombre limité des commandes de la part de l'utilisateur. Ainsi, il est possible d'associer une interface vocale à l'utilisateur ce qui permet de simplifier davantage l'installation du répéteur.

## Revendications

1. Procédé de connexion d'un répéteur de réseau (14) Wi-Fi à un équipement d'accès ciblé (12) mettant en œuvre un réseau sans fil, le procédé comprenant une étape préalable d'envoi, audit équipement d'accès ciblé (12), par un serveur distant (22) d'une clef publique, ladite clef publique étant associée à une clé privée mémorisée uniquement par ledit répéteur de réseau, ladite clef publique permettant de décrypter chaque message crypté avec cette clef privée,
le procédé comprenant une phase d'authentification (PA) du répéteur de réseau (14) auprès de l'équipement d'accès ciblé (12),
ladite phase d'authentification (PA) étant mise en œuvre par le répéteur de réseau (14) lorsqu'il se trouve dans la zone de couverture de l'équipement d'accès ciblé (12) ou lorsqu'il se trouve à l'extérieur de cette zone de couverture mais avec un accès à un réseau local par câble,
ladite phase d'authentification (PA) mise en œuvre par le répéteur de réseau (14) comprenant successivement :
- recherche (110) d'équipements d'accès à proximité du répéteur de réseau (14) ;
- pour le ou chaque équipement d'accès trouvé, envoi (125) d'une requête d'authentification, la requête d'authentification comprenant un message d'authentification crypté en utilisant la clef privée ;
- lorsque le ou l'un des équipements d'accès trouvés correspond à l'équipement d'accès ciblé, réception (140) de paramètres de configuration transmis par cet équipement d'accès ciblé (12) suite au décryptage par cet équipement au moyen de la clef publique du message d'authentification crypté, les paramètres de configuration étant relatifs à l'accès au réseau sans fil mis en œuvre par cet équipement d'accès ciblé (12).

2. Procédé selon la revendication 1, dans lequel lors de l'étape d'envoi (125) d'une requête d'authentification, un équipement d'accès est considéré comme trouvé lorsqu'il est d'un type prédéterminé et identifiable par le répéteur de réseau (14).

3. Procédé selon la revendication 2, dans lequel le type prédéterminé d'un équipement d'accès est identifié par une adresse MAC de cet équipement d'accès.

4. Procédé selon l'une quelconque des revendications précédentes, dans lequel l'information d'identification est envoyée à l'équipement d'accès ciblé (12) de manière automatique suite à une commande d'un répéteur de réseau (14) effectuée par un utilisateur, l'équipement d'accès ciblé (12) étant déterminé par un identifiant relatif à l'utilisateur.

5. Procédé selon l'une quelconque des revendications précédentes, comportant en outre une phase d'optimisation (PO) de l'emplacement du répéteur de réseau (14) mise en œuvre lorsque l'équipement d'accès ciblé (12) est trouvé et comprenant les étapes suivantes :
- détermination (210) de la qualité de connexion sans fil avec l'équipement d'accès ciblé (12) ;
- analyse (221, 222, 224) de cette qualité de connexion sans fil et détermination d'un état caractérisant l'emplacement courant du répéteur de réseau (14) par rapport à l'équipement d'accès ciblé (12) ;
- détermination (221, 222, 224) d'une action nécessaire pour optimiser l'emplacement courant du répéteur de réseau (14) par rapport à l'équipement d'accès ciblé (12) ;
- indication (221, 222, 224) à un utilisateur dudit état et de ladite action.

6. Procédé selon l'une quelconque des revendications précédentes, dans lequel la phase d'optimisation (PO) de l'emplacement du répéteur de réseau (14) comprend en outre une étape (220) de détermination d'une connexion du répéteur de réseau (14) à l'équipement d'accès ciblé (12) par câble.

7. Procédé selon l'une quelconque des revendications précédentes, comportant en outre une phase de finalisation (PF) de connexion comprenant une étape de mise en place d'un réseau sans fil après l'authentification du répéteur de réseau (14) auprès de l'équipement d'accès ciblé (12).

8. Procédé selon la revendication 7, dans lequel la phase de finalisation (PF) de connexion comprend en outre au moins l'une des étapes suivantes :
- mémorisation (321) d'un nom de l'emplacement courant du répéteur ;
- lorsque le répéteur de réseau (14) est connecté par un câble à l'équipement d'accès ciblé (12), proposition (322) de désactivation du réseau sans fil mis en œuvre par l'équipement d'accès ciblé (12) ;
- proposition (323) d'installation d'un autre répéteur de réseau (14) ;
- détermination (324) du temps total écoulé à partir du démarrage du procédé de configuration.

9. Procédé selon l'une quelconque des revendications précédentes, comprenant en outre une phase d'interaction (PI) avec un utilisateur comprenant les étapes suivantes :
- communication (101) des informations en cours de traitement par le répéteur de réseau (14) ;
- acquisition (102) de commandes de l'utilisateur nécessaires pour mettre en œuvre l'étape en cours d'exécution par le répéteur de réseau (14).

10. Procédé selon la revendication 9, dans lequel chaque communication faite à l'utilisateur est faite sous la forme vocale et dans lequel chaque commande de l'utilisateur est donnée par l'utilisateur sous la forme vocale, l'étape (102) d'acquisition de commandes comprend alors un traitement de chaque commande vocale donnée par l'utilisateur et l'association à cette commande vocale d'un évènement correspondant.

11. Produit programme d'ordinateur comportant des instructions logicielles qui, lorsque mises en œuvre par un équipement informatique du répéteur de réseau (14), mettent en œuvre le procédé selon l'une quelconque des revendications précédentes.

12. Répéteur de réseau (14) comprenant des moyens techniques adaptés pour la mise en œuvre du procédé selon l'une quelconque des revendications 1 à 10.

13. Ensemble d'accès (10) comprenant :
- un équipement d'accès (12) apte à mettre en œuvre un réseau sans fil et à recevoir d'un serveur distant (22) une information d'identification ;
- un répéteur de réseau (14) selon la revendication 12 configuré pour se connecter automatiquement à l'équipement d'accès (12) ayant reçu une information d'identification relative à ce répéteur de réseau (14) pour étendre ou remplacer le réseau sans fil mis en œuvre par cet équipement d'accès (12).

## Patentansprüche

1. Verfahren zum Verbinden eines Wi-Fi-Netzwerk-Repeaters (14) mit einem Ziel-Zugangsgerät (12), das ein drahtloses Netzwerk implementiert, das Verfahren umfassend einen vorherigen Sendeschritt eines öffentlichen Schlüssels von einem entfernten Server (22) an das Ziel-Zugangsgerät (12), wobei der öffentliche Schlüssel mit einem privaten Schlüssel assoziiert ist, der nur von dem Netzwerk-Repeater gespeichert wird, wobei der öffentliche Schlüssel es ermöglicht, jede mit diesem privaten Schlüssel verschlüsselte Nachricht zu entschlüsseln,
das Verfahren umfassend eine Authentifizierungsphase (PA) des Netzwerk-Repeaters (14) bei dem Ziel-Zugangsgerät (12),
wobei die Authentifizierungsphase (PA) durch den Netzwerk-Repeater (14) implementiert wird, wenn er sich innerhalb des Abdeckungsbereichs des Ziel-Zugangsgeräts (12) befindet oder wenn er sich außerhalb dieses Abdeckungsbereichs aber mit einem Zugang zu einem kabelgebundenen lokalen Netzwerk befindet,
die Authentifizierungsphase (PA), die von dem Netzwerk-Repeater (14) implementiert wird, nacheinander umfassend:
- Suchen (110) nach Zugangsgeräten in der Nähe des Netzwerk-Repeaters (14);
- für das oder jedes gefundene Zugangsgerät, Senden (125) einer Authentifizierungsanforderung, die Authentifizierungsanforderung umfassend eine Authentifizierungsnachricht, die unter Verwendung des privaten Schlüssels verschlüsselt wird;
- wenn das oder eines der gefundenen Zugangsgeräte dem Ziel-Zugangsgerät entspricht, Empfangen (140) von Konfigurationsparametern, die von diesem Ziel-Zugangsgerät (12) nach Entschlüsseln der verschlüsselten Authentifizierungsnachricht durch dieses Gerät mittels des öffentlichen Schlüssels übertragen werden, wobei sich die Konfigurationsparameter auf den Zugang zu dem drahtlosen Netzwerk beziehen, das von diesem Ziel-Zugangsgerät (12) implementiert wird.

2. Verfahren nach Anspruch 1, wobei bei dem Schritt eines Sendens (125) einer Authentifizierungsanforderung ein Zugangsgerät als gefunden gilt, wenn es von einem vorbestimmten Typ ist und von dem Netzwerk-Repeater (14) identifizierbar ist.

3. Verfahren nach Anspruch 2, wobei der vorbestimmte Typ eines Zugangsgeräts durch eine MAC-Adresse dieses Zugangsgeräts identifiziert wird.

4. Verfahren nach einem der vorherigen Ansprüche, wobei die Identifizierungsinformationen automatisch nach einem Befehl eines Netzwerk-Repeaters (14) durch einen Benutzer an das Ziel-Zugangsgerät (12) gesendet werden, wobei das Ziel-Zugangsgerät (12) durch eine auf den Benutzer bezogene Kennung bestimmt wird.

5. Verfahren nach einem der vorherigen Ansprüche, ferner umfassend eine Optimierungsphase (PO) des Standorts des Netzwerk-Repeaters (14), die durchgeführt wird, wenn das Ziel-Zugangsgerät (12) gefunden wird, und umfassend die folgenden Schritte:
- Bestimmen (210) der Qualität der drahtlosen Verbindung mit dem Ziel-Zugangsgerät (12);
- Analysieren (221, 222, 224) dieser Qualität der drahtlosen Verbindung und Bestimmen eines Zustands, der den aktuellen Standort des Netzwerk-Repeaters (14) in Bezug auf das Ziel-Zugangsgerät (12) charakterisiert;
- Bestimmen (221, 222, 224) einer Aktion, die erforderlich ist, um den aktuellen Standort des Netzwerk-Repeaters (14) in Bezug auf das Ziel-Zugangsgerät (12) zu optimieren;
- Anzeigen (221, 222, 224) des genannten Zustands und der genannten Aktion für einen Benutzer.

6. Verfahren nach einem der vorherigen Ansprüche, wobei die Optimierungsphase (PO) des Standorts des Netzwerk-Repeaters (14) ferner einen Schritt (220) eines Bestimmens einer Verbindung des Netzwerk-Repeaters (14) mit dem Ziel-Zugangsgerät (12) über Kabel umfasst.

7. Verfahren nach einem der vorherigen Ansprüche, ferner umfassend eine Beendigungsphase (PF) der Verbindung, umfassend einen Schritt eines Implementierens eines drahtlosen Netzwerks nach der Authentifizierung des Netzwerk-Repeaters (14) bei dem Ziel-Zugangsgerät (12).

8. Verfahren nach Anspruch 7, wobei die Beendigungsphase (PF) der Verbindung ferner mindestens einen der folgenden Schritte umfasst:
- Speichern (321) eines Namens des aktuellen Standorts des Repeaters;
- wenn der Netzwerk-Repeater (14) über ein Kabel mit dem Ziel-Zugangsgerät (12) verbunden ist, Vorschlagen (322) einer Deaktivierung des drahtlosen Netzwerks, das von dem Ziel-Zugangsgerät (12) implementiert wird;
- Vorschlagen (323) einer Installation eines weiteren Netzwerk-Repeaters (14);
- Bestimmen (324) der Gesamtzeit, die seit dem Start des Konfigurationsprozesses verstrichen ist.

9. Verfahren nach einem der vorherigen Ansprüche, ferner umfassend eine Interaktionsphase (PI) mit einem Benutzer, umfassend die folgenden Schritte:
- Kommunizieren (101) von Informationen, die von dem Netzwerk-Repeater (14) verarbeitet werden;
- Erfassen (102) von Benutzerbefehlen, die erforderlich sind, um den Schritt zu implementieren, der gerade von dem Netzwerk-Repeater (14) ausgeführt wird.

10. Verfahren nach Anspruch 9, wobei jede Kommunikation an den Benutzer in Sprachform erfolgt und wobei jeder Benutzerbefehl von dem Benutzer in Sprachform gegeben wird, wobei der Schritt (102) eines Erfassens von Befehlen dann eine Verarbeitung jedes vom Benutzer gegebenen Sprachbefehls und die Assoziierung eines entsprechenden Ereignisses zu diesem Sprachbefehl umfasst.

11. Computerprogrammprodukt, umfassend Softwareanweisungen, die, wenn sie von einem Computergerät des Netzwerk-Repeaters (14) implementiert werden, das Verfahren nach einem der vorherigen Ansprüche durchführen.

12. Netzwerk-Repeater (14), umfassend technische Einrichtungen, die für die Implementierung des Verfahrens nach einem der Ansprüche 1 bis 10 angepasst sind.

13. Zugangsanordnung (10), umfassend:
- ein Zugangsgerät (12), das geeignet ist, um ein drahtloses Netzwerk zu implementieren und von einem entfernten Server (22) Identifizierungsinformationen zu empfangen;
- einen Netzwerk-Repeater (14) nach Anspruch 12, der konfiguriert ist, um sich automatisch mit dem Zugangsgerät (12) zu verbinden, das Identifizierungsinformationen in Bezug auf diesen Netzwerk-Repeater (14) empfangen hat, um das von diesem Zugangsgerät (12) implementierte drahtlose Netzwerk zu erweitern oder zu ersetzen.

## Claims

1. Method of connecting a Wi-Fi network repeater (14) to a piece of targeted access equipment (12) implementing a wireless network, the method comprising a prior step of sending a public key to said piece of targeted access equipment (12) from a remote server (22), said public key being associated with a private key stored solely by said network repeater, said public key allowing the decryption of each message encrypted with this private key,
the method comprising a phase of authentication (PA) of the network repeater (14) with the piece of targeted access equipment (12),
said phase of authentication (PA) being implemented by the network repeater (14) when it is in the coverage area of the piece of the targeted access equipment (12) or when it is outside this coverage area but with access to a wired local area network,
said phase of authentication (PA) implemented by the network repeater (14) comprising successively:
- search (110) for pieces of access equipment in the vicinity of the network repeater (14);
- for the or each piece of access equipment found, sending (125) of an authentication request, the authentication request comprising an authentication message encrypted using the private key;
- when the or one of the pieces of access equipment found corresponds to the piece of targeted access equipment, receiving (140) of configuration parameters sent by this piece of targeted access equipment (12) after decryption by this piece of equipment of the encrypted authentication message using the public key, the configuration parameters relating to access to the wireless network implemented by this piece of targeted access equipment (12).

2. Method according to claim 1, wherein during the step of sending (125) an authentication request, a piece of access equipment is considered found when it is of a predetermined type identifiable by the network repeater (14).

3. Method according to claim 2, wherein the predetermined type of a piece of access equipment is identified by a MAC address of that piece of access equipment.

4. Method according to any one of the preceding claims, wherein the identification information is sent to the piece of targeted access equipment (12) automatically following a command from a network repeater (14) made by a user, the piece of targeted access equipment (12) being determined by an identifier relating to the user.

5. Method according to any one of the preceding claims, further comprising a phase of optimisation (PO) of the network repeater (14) location implemented when the piece of targeted access equipment (12) is found and comprising the following steps:
- determination (210) of the quality of the wireless connection with the piece of targeted access equipment (12);
- analysis (221, 222, 224) of this wireless connection quality and determination of a state characterising the current location of the network repeater (14) relative to the piece of targeted access equipment (12);
- determination (221, 222, 224) of an action required to optimise the current location of the network repeater (14) relative to the piece of targeted access equipment (12);
- indication (221, 222, 224) to a user of said state and said action.

6. Method according to any one of the preceding claims, wherein the phase of optimisation (PO) of the network repeater (14) location further comprises a step (220) of determining a wired connection of the network repeater (14) to the piece of targeted access equipment (12).

7. Method according to any one of the preceding claims, further comprising a phase of finalisation (PF) of the connection, comprising a step of implementing a wireless network after authentication of the network repeater (14) with the piece of targeted access equipment (12).

8. Method according to claim 7, wherein the phase of finalisation (PF) of the connection further comprises at least one of the following steps:
- storage (321) of a name of the current repeater location;
- when the network repeater (14) has a wired connection to the piece of targeted access equipment (12), proposal (322) to deactivate the wireless network implemented by the piece of targeted access equipment (12);
- proposal (323) to install another network repeater (14);
- determination (324) of the total time elapsed from the start of the configuration process.

9. Method according to any one of the preceding claims, further comprising a phase of interaction (PI) with a user, comprising the following steps:
- communication (101) of the information being processed by the network repeater (14);
- acquisition (102) of user commands required to implement the step being executed by the network repeater (14).

10. Method according to claim 9, wherein each communication to the user is spoken and wherein each command from the user is spoken, the command acquisition step (102) then comprising processing of each spoken command given by the user and the association of a corresponding event with this spoken command.

11. Computer program product comprising software instructions which, when implemented by a piece of computing equipment of the network repeater (14), implement the method according to any one of the preceding claims.

12. Network repeater (14) comprising technical means adapted to implement the method according to any one of claims 1 to 10.

13. Access set (10) comprising:
- a piece of access equipment (12) capable of implementing a wireless network and receiving identification information from a remote server (22);
- a network repeater (14) according to claim 12, configured to connect automatically to the piece of access equipment (12) having received identification information relating to this network repeater (14) in order to extend or replace the wireless network implemented by this piece of access equipment (12).
